# EUROPÄISCHE PATENTSCHRIFT

(11) **EP 3 486 741 B1**
(45) Veröffentlichungstag und Bekanntmachung des Hinweises auf die Patenterteilung: **19.02.2020**
(21) Anmeldenummer: 18201089.2
(22) Anmeldetag: 18.10.2018
(51) Int. Cl.: G05D 1/02, G01C 21/00, G01C 21/20

(54) **SELBSTFAHRENDER ROBOTER**
SELF-PROPELLED ROBOT
ROBOT AUTOMOTRICE

(30) Priorität: 16.11.2017 DE 102017126930
(43) Veröffentlichungstag der Anmeldung: 22.05.2019
(73) Patentinhaber: Miele & Cie. KG, 33332 Gütersloh (DE)
(72) Erfinder: Ernst, Holger, 33613 Bielefeld (DE); Riedenklau, Eckard, 33647 Bielefeld (DE)

(56) Entgegenhaltungen:
- DE-A1-102012 109 004
- DE-A1-102015 119 501
- US-A1- 2014 316 636

## Beschreibung

Die Erfindung betrifft einen selbstfahrenden Roboter, insbesondere ein selbstfahrendes Bodenbearbeitungsgerät, mit einem Orientierungs-Sensorsystem zur Erstellung und Pflege einer auf Bilder- und/oder Kartendaten basierenden internen Karte und einer Programmiereinrichtung.

Selbstfahrende Roboter dienen einer automatisierten Verrichtung nicht ortsgebundener Tätigkeiten. Wenn der selbstfahrende Roboter ein selbstfahrendes Bodenbearbeitungsgerät ist, dient er der automatisierten Bearbeitung von Bodenflächen, ohne dass er von einem Nutzer geschoben oder geführt werden muss. Zu solchen selbstfahrenden Bodenbearbeitungsgeräten zählen beispielsweise Saugroboter, welche zum Reinigen eines Bodens ausgebildet sind, oder Mähroboter, welche zum Rasenmähen ausgebildet sind.

Aus einem nicht druckschriftlich belegten Stand der Technik ist bekannt, dass der selbstfahrende Roboter seinem Nutzer ermöglicht, Ortsbezeichnungen in seiner internen Karte zu hinterlegen. Die Ortsbezeichnungen kann der Nutzer über eine entsprechend ausgebildete App mittels herkömmlicher Bedienelemente und Touch-Interaktion in der internen Karte des Roboters hinterlegen.

Das Erstellen der Beschriftungen für die Ortsbezeichnungen mittels Touchscreen und graphischen Bedienelementen ist für den Nutzer jedoch mühsam - gerade mit steigender Anzahl an Ortsbezeichnungen. Zudem ist eine interne Karte des selbstfahrenden Roboters für den Nutzer nicht immer klar und verständlich. Es kann daher für den Nutzer schwierig sein, seine Wohnumgebung in der internen Karte wiederzuerkennen. Daher kann es für ihn schwierig sein, eine korrekte Position für eine Ortsbezeichnung zu finden.

Aus der US 2014 / 316636 A1 und der DE 10 2015 119501 A1 sind selbstfahrende Roboter bekannt, welche ein Orientierungs-Sensorsystem zur Erstellung und Pflege einer auf Bilder- und/oder Kartendaten basierenden internen Karte und eine Programmiereinrichtung aufweisen, wobei die Programmiereinrichtung ausgebildet und eingerichtet ist, bei einer Positionierung des selbstfahrenden Roboters an einem Ort ein Befehlssignal zu empfangen, das eine Ortsbezeichnung enthält, eine dem Ort entsprechende Position des selbstfahrenden Roboters in der internen Karte zu bestimmen und die Ortsbezeichnung der bestimmten Position in der internen Karte zuzuordnen.

Der Erfindung stellt sich somit das Problem, einen selbstfahrenden Saugroboter bereitzustellen, der eine einfache Positionierung einer Ortsbezeichnung in seiner internen Karte ermöglicht.

Erfindungsgemäß wird dieses Problem durch einen selbstfahrenden Saugroboter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Bereitstellung einer einfachen Positionierungsmöglichkeit einer Ortsbezeichnung in der internen Karte des selbstfahrenden Roboters darin, dass zur Positionierung der Ortsbezeichnung keine graphische Bedienoberfläche benötigt wird. Der selbstfahrende Roboter dient selbst als physisches Interaktionsobjekt. Die Beschriftung der internen Karte mit einer Ortsbezeichnung ist intuitiv möglich und somit deutlich vereinfacht.

Die Erfindung betrifft einen selbstfahrenden Roboter mit einem Orientierungs-Sensorsystem zur Erstellung und Pflege einer auf Bilder- und/oder Kartendaten basierenden internen Karte und einer Programmiereinrichtung, wobei die Programmiereinrichtung ausgebildet und eingerichtet ist,
- vor, nach und/oder bei einer Positionierung des selbstfahrenden Roboters an einem Ort ein Befehlssignal zu empfangen, das eine Ortsbezeichnung enthält;
- eine dem Ort entsprechende Position des selbstfahrenden Roboters in der internen Karte zu bestimmen; und
- die Ortsbezeichnung der bestimmten Position in der internen Karte zuzuordnen.

Der selbstfahrende Roboter fungiert als Repräsentation für die Beschriftung mit der Ortsbezeichnung, während die Wohnumgebung die interne Karte darstellt. Bei der internen Karte handelt es sich um eine in dem selbstfahrenden Roboter hinterlegte Karte, die Bilder- und/oder Kartendaten enthält. Der selbstfahrende Roboter ist bevorzugt ausgebildet, die interne Karte selber zu erstellen. Bevorzugt weist er mindestens eine Sensoreinrichtung auf, mittels der er Informationsdaten über die Wohnumgebung bei einer Erkundungs- oder Reinigungsfahrt erfassen kann. Weiterhin weist der Roboter eine Recheneinrichtung auf, die ausgebildet ist, anhand der erfassten Informationsdaten die interne Karte zu erstellen. Weiterhin weist er bevorzugt einen Speicher auf, in dem die interne Karte gespeichert werden kann. Bevorzugt ist der selbstfahrende Roboter ein Saugroboter, welcher zum Reinigen eines Bodens ausgebildet ist.

Der selbstfahrende Roboter kann vor, nach und/oder bei seiner Positionierung an einem Ort das Befehlssignal empfangen, das die Ortsbezeichnung enthält. Bevorzugt weist der selbstfahrende Roboter einen Labeling-Modus auf, in dem die Programmiereinrichtung eingerichtet und ausgebildet ist, nach Empfangen einer Ortsbezeichnung eine dem Ort entsprechende Position des selbstfahrenden Roboters in der internen Karte zu bestimmen und die Ortsbezeichnung der bestimmten Position in der internen Karte zuzuordnen.

Der Nutzer kann den selbstfahrenden Roboter entweder händisch oder manuell ferngesteuert an einem Ort der Wohnumgebung platzieren, an der die Ortsbezeichnung in der internen Karte positioniert werden soll. Durch das Befehlssignal, das der selbstfahrende Roboter empfängt, kann der Nutzer ihm die Ortsbezeichnung beispielsweise über ein mit einer Mikrophon-Einrichtung ausgebildeten Sprachentool vermitteln. Anschließend gleicht der Roboter seine Position in der Wohnumgebung mit seiner Position in seiner internen Karte ab und fügt die Ortsbezeichnung in die interne Karte ein. Der Nutzer braucht daher dem selbstfahrenden Roboter lediglich an einen gewünschten Ort zu platzieren und die Ortsbezeichnung mitzuteilen, während der selbstfahrende Roboter ausgebildet ist, seine Position zu bestimmen und die Ortsbezeichnung in seiner internen Karte der bestimmten Position zuzuordnen. Damit entfällt Beschriftungsaufwand für den Nutzer. Weiterhin entfallen menschliche Fehler beim Einfügen von Ortsbezeichnungen in die interne Karte.

Bevorzugt ist die Programmiereinrichtung eingerichtet und ausgebildet, der Position, der die Ortsbezeichnung zugeordnet ist, einen Wohnraum zuzuordnen. Der Wohnraum ist bevorzugt durch eine oder mehrere Wände in der internen Karte begrenzt, wobei eine offene Stelle in der Wand, an der sich beispielsweise eine Tür befindet, als Wand interpretiert wird.

In einer bevorzugten Ausführungsform weist der selbstfahrende Roboter eine Schnittstelle auf, welche eingerichtet und ausgebildet ist, das Befehlssignal von einem elektrischen Eingabegerät drahtlos zu empfangen. Beispielsweise kann die Schnittstelle eingerichtet und ausgebildet sein, das Befehlssignal von dem elektrischen Eingabegerät über ein Sprachentool oder eine App zu empfangen. Das elektrische Eingabegerät ist beispielsweise ein Smartphone, ein Tablet oder ein Computer.

Bevorzugt ist die Programmiereinrichtung eingerichtet und ausgebildet, eine Position des selbstfahrenden Roboters in der internen Karte zu bestimmen und den Ort mit der internen Karte abzugleichen, um die dem Ort entsprechende Position des selbstfahrenden Roboters in der internen Karte zu bestimmen. Der selbstfahrende Roboter weist beispielsweise mindestens eine Sensoreinrichtung wie beispielsweise einen Navigationssensor oder ein neuronales Netz auf, um sich zu orientieren und/oder zu lokalisieren.

In einer bevorzugten Ausführungsform ist die Programmiereinrichtung eingerichtet und ausgebildet, eine temporäre Karte zu erstellen, um eine relative Position des Ortes zu der Position des selbstfahrenden Roboters nachzuführen, und die temporäre Karte mit der internen Karte abzugleichen, um die Position des selbstfahrenden Roboters in der internen Karte zu bestimmen. Dies ist insbesondere vorteilhaft, wenn der selbstfahrende Roboter von dem Nutzer händisch zu einem Ort gebracht wird, dem der Nutzer eine Ortsbezeichnung in die interne Karte hinzufügen will. Der selbstfahrende Roboter weist aufgrund des Kidnappings durch den Nutzer von seiner letzten ihm bekannten Position nicht ohne weiteres, an welcher Position er sich nach dem Kidnapping in der Wohnumgebung befindet und kann sich dadurch besser relokalisieren.

Bevorzugt ist die Programmiereinrichtung eingerichtet und ausgebildet, sich selbst abzufragen, ob die bestimmte Position mit ausreichender Genauigkeit bestimmt ist. Bevorzugter ist die Programmiereinrichtung eingerichtet und ausgebildet, bei Beantwortung der Selbstabfrage mit nein, erneut seine Position in der internen Karte zu bestimmen und den Ort mit der internen Karte abzugleichen, um die dem Ort entsprechende Position des selbstfahrenden Roboters in der internen Karte erneut zu bestimmen. Bevorzugter ist die Programmiereinrichtung eingerichtet und ausgebildet, bei mehrmaliger Beantwortung der Selbstabfrage mit nein, ein negatives Feedback-Signal an den Nutzer zu generieren, in dem er den Nutzer um Neupositionierung bittet. Bevorzugter ist die Programmiereinrichtung eingerichtet und ausgebildet, bei Beantwortung der Selbstabfrage mit ja, die Ortsbezeichnung der bestimmten Position in der internen Karte zuzuordnen. Bevorzugter ist die Programmiereinrichtung weiterhin eingerichtet und ausgebildet, bei Beantwortung der Selbstabfrage mit ja, ein positives Feedback-Signal zu generieren, in dem sie dem Nutzer die erfolgreiche Bestimmung seiner Position mitteilt. Bevorzugt ist die Programmiereinrichtung eingerichtet und ausgebildet, zusammen mit dem positiven Feedback-Signal den Nutzer aufzufordern, die bestimmte Position zu bestätigen.

Bevorzugt ist die Programmiereinrichtung eingerichtet und ausgebildet, die in der internen Karte bestimmte Position im Anschluss an den Abgleich der temporären Karte mit der internen Karte und/oder nach der Bestätigung der bestimmten Position durch den Nutzer in die interne Karte zu übernehmen, um die Ortsbezeichnung der bestimmten Position in der internen Karte zuzuordnen. Bevorzugt werden die Ortsbezeichnung und die interne Karte zusammen in dem Speicher des selbstfahrenden Roboters gespeichert.

In einer bevorzugten Ausführungsform weist der selbstfahrende Roboter weiterhin eine Anzeigevorrichtung auf, welche ausgebildet ist, die interne Karte mit der bestimmten Position und der ihr zugeordneten Ortsbezeichnung anzuzeigen. Die Ortsbezeichnung bietet dem Nutzer einen Anhaltspunkt zur Orientierung in der internen Karte. Durch sie wird der Wiedererkennungswert erhöht. Die Anzeigevorrichtung kann weiterhin alternativ oder zusätzlich ausgebildet sein, das negative bzw. positive Feedback-Signal anzuzeigen. Die Anzeigevorrichtung kann ein Display beispielsweise in Form eines Touchscreens sein. In einer alternativen Ausführungsform kann die interne Karte auch durch eine App auf einem Smartphone oder Smartdevice angezeigt werden.

In einer bevorzugten Ausführungsform weist der selbstfahrende Roboter weiterhin eine Ausgabeeinrichtung auf, welche ausgebildet ist, das Bestimmen seiner Position in der internen Karte zu bestätigen. Die Ausgabevorrichtung kann weiterhin alternativ oder zusätzlich ausgebildet sein, das negative bzw. positive Feedback-Signal auszugeben. Die Ausgabeeinrichtung kann identisch mit oder verschieden zu der vorstehend genannten Anzeigevorrichtung ausgebildet sein. Die Ausgabeeinrichtung kann ausgebildet sein, ausgegebene Signale auditiv auszugeben und beispielsweise ein Lautsprecher sein, dann weist der selbstfahrende Roboter bevorzugt weiterhin eine Eingabeeinrichtung wie beispielsweise eine Mikrophon-Einrichtung auf, so dass der Nutzer allein oder ergänzend auf sprachlicher Basis mit dem selbstfahrenden Roboter kommunizieren kann. In einer alternativen Ausführungsform kann die Kommunikation zwischen dem Nutzer und dem selbstfahrenden Roboter auch über Spracherkennungssystem externer Geräte wie Smartphones oder Sprachboxen ablaufen.

Der selbstfahrende Roboter ist bevorzugt ausgebildet, Möbel und/oder Wohnräume mittels eines neuronalen Netzes zu erkennen. Dies ist beispielsweise in der DE 10 2016 124 913.0 beschrieben. Damit kann das empfangene Befehlssignal überprüft werden und/oder das Befehlssignal muss nicht von extern sondern kann auch von intern empfangen werden, wenn es intern erzeugt wird. Zudem können mittels des neuronalen Netzes erhaltene Daten weiterhin von der Programmiereinrichtung verwendet werden, um die Position des selbstfahrenden Roboters in der internen Karte schneller zu bestimmen.

Bevorzugt weist der selbstfahrende Roboter weiterhin ein Kommunikationsmodul auf, das ausgebildet ist, mit einem elektrischen Gerät des Nutzers drahtlos und bidirektional zu kommunizieren. Das Kommunikationsmodul ist bevorzugt, eingerichtet und ausgebildet, das negative und/oder positive Feedback-Signal, wenn generiert, an das elektrische Gerät zu senden. Das elektrische Gerät des Nutzers kann ein Smartphone, Tablet, Computer, vernetzter Fernseher oder ein SmartHome-Display sein. Das elektrische Gerät dient zur Kontrolle der Beschriftung der internen Karte mit der Ortsbezeichnung. Das Kommunikationsmodul ist bevorzugt eingerichtet und ausgebildet, nach einem Zuordnen der Ortsbezeichnung zu der bestimmten Position in der internen Karte ein Abfrage-Signal an das elektrische Gerät zu senden, in dem eine weitere Ortsbezeichnung abgefragt wird.

Bevorzugt ist der selbstfahrende Roboter eingerichtet und ausgebildet, die der bestimmten Position in der internen Karte zugeordnete Ortsbezeichnung zur Erstellung eines Reinigungsplans und/oder zum Einstellen eines Reinigungsmodus bei der Reinigung des der Ortsbezeichnung zugeordneten Wohnraums zu verwenden, der durch eine oder mehrere Wände begrenzt ist. Bevorzugt ist der selbstfahrende Roboter eingerichtet und ausgebildet, den Reinigungsplan und/oder den Reinigungsmodus anzuzeigen und/oder auszugeben und/oder an das elektrische Gerät zu übermitteln.

Bevorzugt ist die Programmiereinrichtung eingerichtet und ausgebildet, wenn der selbstfahrende Roboter im Standardmodus ist und in diesem Modus ein weiteres Befehlssignals empfängt, der die Ortsbezeichnung enthält, selbstständig zu der Position zu fahren, der die Ortsbezeichnung zugeordnet ist, und den der Position zugeordneten Wohnraum selbstständig zu reinigen.

In einer bevorzugten Ausführungsform ist die Programmiereinrichtung eingerichtet und ausgebildet, nach Empfang eines weiteren Befehlssignals, welches die Ortsbezeichnung und eine der Ortsbezeichnung zugeordnete Zeit enthält, eine Saugtätigkeit an der der Ortsbezeichnung zugeordneten Position zu der der Ortsbezeichnung zugeordneten Zeit automatisch zu beginnen. Bevorzugt ist der selbstfahrende Roboter eingerichtet und ausgebildet, das weitere Befehlssignals in seinem Speicher zu speichern.

In einer bevorzugten Ausführungsform ist die Programmiereinrichtung eingerichtet und ausgebildet, der Ortsbezeichnung, einen Reinigungsmodus zuzuordnen. Bevorzugter ist die Programmiereinrichtung eingerichtet und ausgebildet, den zuzuordnenden Reinigungsmodus auszuwählen beispielsweise aus einem Turbomodus, einem Ecomodus und einem Standardmodus. Ein Turbomodus ist ein Reinigungsmodus, bei dem der selbstfahrende Roboter im Vergleich zu den anderen beiden Modi eine höhere Saugleistung einstellt. Ein Ecomodus ist ein Reinigungsmodus, bei dem der selbstfahrende Roboter im Vergleich zu den anderen beiden Modi einen niedrigen Energieverbrauch einstellt. Ein Standardmodus ist ein Reinigungsmodus, bei dem der selbstfahrende Roboter im Vergleich zu dem Turbomodus eine niedrigere Saugleistung und einen geringeren Energieverbrauch und im Vergleich zu dem Ecomodus einen höheren Energieverbrauch und eine höhere Saugleistung einstellt. Bevorzugt ist die Programmiereinrichtung eingerichtet und ausgebildet, über die Anzeige- und/oder Ausgabevorrichtung und/oder das elektrische Gerät, dem Nutzer den der Ortsbezeichnung zugeordneten Reinigungsmodus anzuzeigen und/oder auszugeben, bevorzugter ist sie weiterhin ausgebildet, die Zuordnung in dem Speicher zu speichern, wenn der Nutzer die Zuordnung bestätigt.

Bevorzugt sind in dem Speicher des selbstfahrenden Roboters vorbestimmte Ortsbezeichnungen hinterlegt, denen jeweils ein Reinigungsmodus zugeordnet ist, und ist die Programmiereinrichtung eingerichtet und ausgebildet, die Ortsbezeichnung mit den vorbestimmten Ortsbezeichnungen zu vergleichen und bei Übereinstimmung der Ortsbezeichnung mit einer der vorbestimmten Ortsbezeichnungen den der vorbestimmten Ortsbezeichnung zugeordneten Reinigungsmodus der Ortsbezeichnung zuzuordnen. In einer bevorzugten Ausführungsform ist die Programmiereinrichtung eingerichtet und ausgebildet, der Ortsbezeichnung bei Übereinstimmung der Ortsbezeichnung mit einer der vorbestimmten Ortsbezeichnungen einen Reinigungsplan für die Ortsbezeichnung zu erzeugen, in dem festgelegt ist, wann und in welchem Reinigungsmodus der der Ortsbezeichnung zugeordnete Wohnraum gereinigt werden soll.

Ein Ausführungsbeispiel der Erfindung ist in den Zeichnungen rein schematisch dargestellt und wird nachfolgend näher beschrieben. Es zeigt
- Fig. 1: ein Ablaufdiagramm eines Verfahrens, das ein Nutzer und ein selbstfahrender Roboter durchlaufen, um eine Ortsbezeichnung in einer internen Karte des Roboters zu positionieren; und
- Fig. 2: schematisch und nicht maßstabsgerecht eine stilisierte Ansicht einer internen Karte eines selbstfahrenden Roboters.

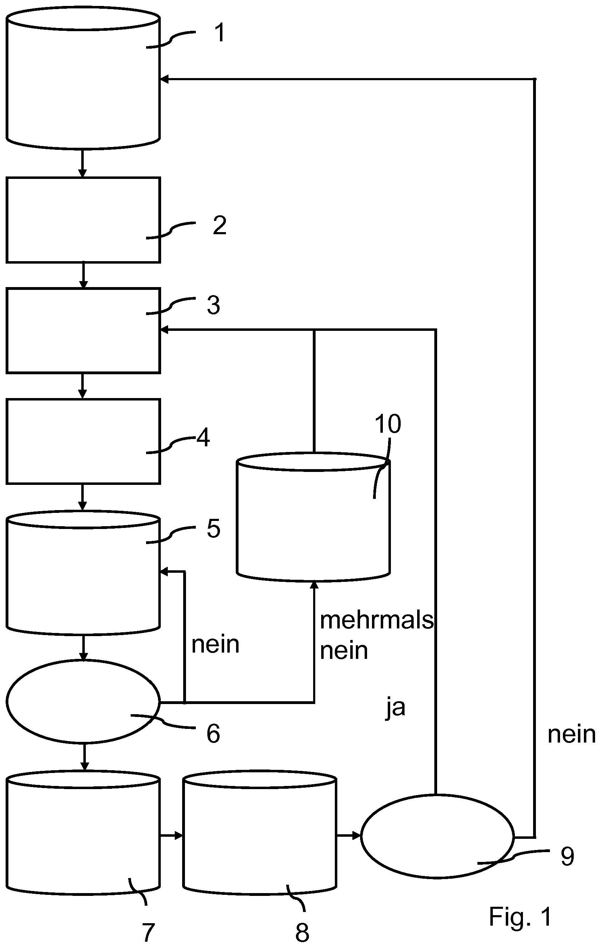

Fig. 1 zeigt ein Ablaufdiagramm eines Verfahrens, das ein Nutzer und der selbstfahrende Roboter durchlaufen, um eine Ortsbezeichnung in einer internen Karte des Roboters zu positionieren. Die Programmiereinrichtung eines Saugroboters ist also derart ausgebildet und eingerichtete, dass ein solches Verfahren zwischen Nutzer und Gerät abläuft.

In Schritt 1 befindet sich der selbstfahrende Roboter in einem Standardmodus. Er weist eine interne Karte auf, die in ihm hinterlegt ist. In Schritt 2 startet der Nutzer einen Labeling-Modus über ein Befehlssignal beispielsweise mittels einer App, eines Sprachentools oder eines weiteren Bedienelements eines elektrischen Geräts beispielsweise eines Smartphones oder des selbstfahrenden Roboters. In Schritt 3 positioniert der Nutzer den selbstfahrenden Roboter an einem Ort in der Wohnumgebung, deren Ortsbezeichnung der internen Karte des Roboters hinzugefügt werden soll. Diesen Schritt kann der Nutzer händisch oder per Fernsteuerung realisieren. In Schritt 4 gibt der Nutzer ein Befehlssignal, das die Ortsbezeichnung enthält, beispielsweise mittels der App, des Sprachentools durch Aussprechen der Ortsbezeichnung oder des weiteren Bedienelements beispielsweise durch Eintippen der Ortsbezeichnung. In Schritt 5 orientiert sich der selbstfahrende Roboter, um seine dem Ort entsprechende Position in der internen Karte zu bestimmen, wobei er eine Sensoreinrichtung wie beispielsweise einen oder mehrere Navigationssensoren nutzen kann. In Schritt 6 führt der selbstfahrende Roboter eine Selbstabfrage durch, ob er seine Position in der internen Karte in Schritt 5 mit hinreichender Genauigkeit bestimmen konnte bzw. ob er sich mit hinreichender Genauigkeit relokalisieren konnte. Wenn die Selbstabfrage in dem Schritt 6 mit nein beantwortet wird, wiederholt der Roboter den Schritt 5. Wenn die Selbstabfrage in dem Schritt 6, mehrmals beispielsweise dreimal mit nein beantwortet wird, bricht der selbstfahrende Roboter die Relokalisierung in Schritt 10 mit negativem Feedback-Signal an den Nutzer und Bitte um Neupositionierung ab, so dass zum Schritt 3 zurückgekehrt wird. Wenn die Selbstabfrage in Schritt 6 mit ja beantwortet wird, gibt der selbstfahrende Roboter dem Nutzer in Schritt 7 ein positives Feedback-Signal beispielsweise über die App oder das Sprachentool oder das weitere Bedienelement. In Schritt 8 ordnet der Roboter die Ortsbezeichnung der bestimmten Position in der internen Karte zu. In Schritt 9 fragt der Roboter den Nutzer über das elektrische Gerät oder sich selbst, ob der Nutzer der internen Karte eine weitere Ortsbezeichnung hinzufügen will. Wenn der Nutzer verneint, dass er eine weitere Ortsbezeichnung der internen Karte hinzufügen will, kehrt der Roboter in den Standardmodus zu dem Schritt 1 zurück. Wenn der Nutzer bejaht, wird zum Schritt 3 zurückgekehrt. Der Roboter kann den Nutzer ggf. in Schritt 9 auffordern, zu Schritt 3 zurückzukehren, wenn er bejahen will und mit der Hinzufügung einer Ortsbezeichnung zu der internen Karte fortfahren will. Der selbstfahrende Roboter ist eingerichtet und ausgebildet, die Schritte 5 bis 10 selbstständig auszuführen.

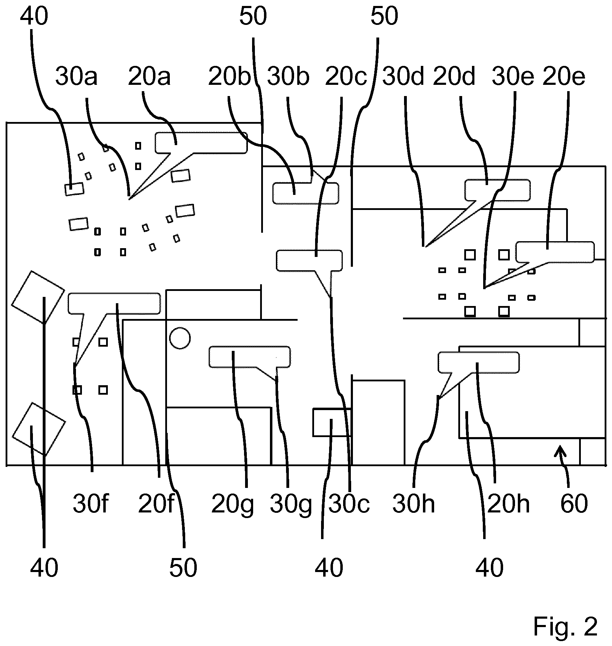

Fig. 2 zeigt eine stilisierte Ansicht einer internen Karte eines selbstfahrenden Roboters. Gezeigt ist eine stilisierte Ansicht der internen Karte 60 des selbstfahrenden Roboters (nicht gezeigt), der mittels des in Fig. 1 gezeigten Verfahrens seiner internen Karte 60 mehrere Ortsbezeichnungen 30a bis 30h hinzugefügt hat. Die Bilder- oder Kartendaten der internen Karte 60, die in dem selbstfahrenden Roboter hinterlegt ist, weisen mehrere Wände 50 und Möbelstücke 40 auf, die hier schematisch bzw. skizzenhaft, stilisiert und nichtmaßstabsgerecht dargestellt sind. Im Laufe des in Fig. 1 gezeigten Verfahrens, dessen Schritte 3 bis 9 und ggf. 10 mehrmals durchlaufen wurden, hat der Nutzer dem selbstfahrenden Roboter die Ortsbezeichnungen 20a bis 20h mitgeteilt. Rein beispielhaft lautet die Ortsbezeichnung 20a "Essbereich", die Ortsbezeichnung 20b "Eingang", die Ortsbezeichnung 20c "Flur", die Ortsbezeichnung 20d "Küche", die Ortsbezeichnung 20e "Küchentisch", die Ortsbezeichnung 20f "Wohnzimmer", die Ortsbezeichnung 20g "Badezimmer" und die Ortsbezeichnung 20h "Schlafzimmer". Die Ortsbezeichnungen 20a bis 20h hat der Roboter beim Durchlaufen des jeweiligen Schritts 8 in dem in Fig. 1 gezeigten Verfahren der jeweilig bestimmten Position 30a bis 30h in der internen Karte 60 zugeordnet. Die in Fig. 2 gezeigte interne Karte kann dem Nutzer über eine Anzeigevorrichtung des selbstfahrenden Roboters oder eine Anzeigevorrichtung des elektrischen Geräts angezeigt werden.

### Bezugszeichenliste

- 20a-20h: jeweilige Ortsbezeichnung
- 30a-30h: jeweilige Position
- 40: Möbelstück
- 50: Wand
- 60: interne Karte

## Patentansprüche

1. Selbstfahrender Roboter mit einem Orientierungs-Sensorsystem zur Erstellung und Pflege einer auf Bilder- und/oder Kartendaten basierenden internen Karte (60) und einer Programmiereinrichtung, wobei die Programmiereinrichtung ausgebildet und eingerichtet ist,
- vor, nach und/oder bei einer Positionierung des selbstfahrenden Roboters an einem Ort ein Befehlssignal zu empfangen, das eine Ortsbezeichnung (20a-20h) enthält;
- eine dem Ort entsprechende Position (30a-30h) des selbstfahrenden Roboters in der internen Karte (60) zu bestimmen; **dadurch gekennzeichnet, dass** die Programmiereinrichtung dazu eingerichtet und ausgebildet ist, eine temporäre Karte zu erstellen, um eine relative Position des Ortes zu der Position (30a-30h) des selbstfahrenden Roboters nachzuführen, und die temporäre Karte mit der internen Karte (60) abzugleichen, um die Position (30a-30h) des selbstfahrenden Roboters in der internen Karte (60) zu bestimmen; und
- die Ortsbezeichnung (20a-20h) der bestimmten Position (30a-30h) in der internen Karte (60) zuzuordnen.

2. Selbstfahrender Roboter nach Anspruch 1, **gekennzeichnet durch** eine Schnittstelle, welche eingerichtet und ausgebildet ist, das Befehlssignal von einem elektrischen Eingabegerät drahtlos zu empfangen.

3. Selbstfahrender Roboter nach Anspruch 1, **dadurch gekennzeichnet, dass** die Programmiereinrichtung eingerichtet und ausgebildet ist, die in der internen Karte (60) bestimmte Position (30a-30h) im Anschluss an den Abgleich der temporären Karte mit der internen Karte (60) in die interne Karte (60) zu übernehmen, um die Ortsbezeichnung (20a-20h) der bestimmten Position (30a-30h) in der internen Karte (60) zuzuordnen.

4. Selbstfahrender Roboter nach einem der vorangehenden Ansprüche, **gekennzeichnet durch** eine Anzeigevorrichtung, welche ausgebildet ist, die interne Karte (60) mit der bestimmten Position (30a-30h) und der ihr zugeordneten Ortsbezeichnung (20a-20h) anzuzeigen.

5. Selbstfahrender Roboter nach einem der vorangehenden Ansprüche, **gekennzeichnet durch** eine Ausgabeeinrichtung, welche ausgebildet ist, das Bestimmen seiner Position (30a-30h) in der internen Karte (60) zu bestätigen.

6. Selbstfahrender Roboter nach einem der vorangehenden Ansprüche, **dadurch gekennzeichnet, dass** er eingerichtet und ausgebildet ist, Möbel und/oder Wohnräume mittels eines neuronalen Netzes zu erkennen.

7. Selbstfahrender Roboter nach einem der vorangehenden Ansprüche, **gekennzeichnet durch** ein Kommunikationsmodul, welches eingerichtet und ausgebildet ist, nach einem Zuordnen der Ortsbezeichnung (20a-20h) zu der bestimmten Position (30a-30h) in der internen Karte (60) eine weitere Ortsbezeichnung (20a-20h) abzufragen.

8. Selbstfahrender Roboter nach einem der vorangehenden Ansprüche, **dadurch gekennzeichnet, dass** die Programmiereinrichtung eingerichtet und ausgebildet ist, nach Empfang eines weiteren Befehlssignals, welches die Ortsbezeichnung (20a-20h) und eine der Ortsbezeichnung (20a-20h) zugeordnete Zeit enthält, eine Saugtätigkeit an der der Ortsbezeichnung (20a-20h) zugeordneten Position (30a-30h) zu der der Ortsbezeichnung (20a-20h) zugeordneten Zeit automatisch zu beginnen.

## Claims

1. Self-propelled robot comprising an orientation sensor system for creating and maintaining an internal map (60) based on image and/or map data, and a programming means, the programming means being designed and configured to:
- receive, before, after and/or during positioning of the self-propelled robot in a location, a command signal containing a location name (20a-20h);
- determine, in the internal map (60), a position (30a-30h) of the self-propelled robot corresponding to the location;
**characterised in that** the programming means is configured and designed to create a temporary map in order to track a relative position of the location with respect to the position (30a-30h) of the self-propelled robot, and to match the temporary map with the internal map (60), in order to determine the position (30a-30h) of the self-propelled robot in the internal map (60); and
- associate the location name (20a-20h) with the determined position (30a-30h) in the internal map (60).

2. Self-propelled robot according to claim 1, **characterised by** an interface which is configured and designed to wirelessly receive the command signal from an electrical input device.

3. Self-propelled robot according to claim 1, **characterised in that** the programming means is configured and designed to incorporate, into the internal map (60), the position (30a-30h) determined in the internal map (60) following the matching of the temporary map with the internal map (60), in order to associate the location name (20a-20h) with the determined position (30a-30h) in the internal map (60).

4. Self-propelled robot according to any of the preceding claims, **characterised by** a display apparatus which is designed to display the internal map (60) having the determined position (30a-30h) and the location name (20a-20h) associated therewith.

5. Self-propelled robot according to any of the preceding claims, **characterised by** an output means which is designed to confirm the determination of its position (30a-30h) in the internal map (60).

6. Self-propelled robot according to any of the preceding claims, **characterised in that** it is configured and designed to recognise furniture and/or living spaces by means of a neural network.

7. Self-propelled robot according to any of the preceding claims, **characterised by** a communication module which is configured and designed, after associating the location name (20a-20h) with the determined position (30a-30h) in the internal map (60), to query another location name (20a-20h).

8. Self-propelled robot according to any of the preceding claims, **characterised in that** the programming means is configured and designed, after receiving a further command signal which contains the location name (20a-20h) and a time associated with the location name (20a-20h), to automatically start a vacuuming action at the position (30a-30h) associated with the location name (20a-20h) at the time associated with the location name (20a-20h).

## Revendications

1. Robot automoteur doté d'un système de détection d'orientation permettant de créer et de gérer une carte interne (60) reposant sur des données d'image et/ou des données cartographiques, ainsi qu'un dispositif de programmation, le dispositif de programmation étant conçu et configuré pour
- recevoir un signal de commande contenant un nom d'emplacement (20a-20h) avant, après et/ou pendant un positionnement du robot automoteur à un emplacement ;
- déterminer une position (30a-30h) correspondant à l'emplacement du robot automoteur dans la carte interne (60) ;
**caractérisé en ce que** le dispositif de programmation est conçu et configuré pour créer une carte temporaire afin de suivre une position relative de l'emplacement par rapport à la position (30a-30h) du robot automoteur, et synchroniser la carte temporaire avec la carte interne (60) afin de déterminer la position (30a-30h) du robot automoteur dans la carte interne (60) ; et pour
- associer le nom d'emplacement (20a-20h) de la position (30a-30h) déterminée dans la carte interne (60).

2. Robot automoteur selon la revendication 1, **caractérisé par** une interface qui est conçue et configurée pour recevoir le signal de commande provenant d'un dispositif d'entrée électrique sans fil.

3. Robot automoteur selon la revendication 1, **caractérisé en ce que** le dispositif de programmation est conçu et configuré pour prendre en charge la position (30a-30h) déterminée dans la carte interne (60) à la suite de la synchronisation de la carte temporaire avec la carte interne (60) dans la carte interne (60), afin d'associer le nom d'emplacement (20a-20h) de la position (30a-30h) déterminée dans la carte interne (60).

4. Robot automoteur selon l'une des revendications précédentes, **caractérisé par** un dispositif d'affichage qui est configuré pour afficher la carte interne (60) avec la position (30a-30h) déterminée et son nom d'emplacement (20a-20h) associé.

5. Robot automoteur selon l'une des revendications précédentes, **caractérisé par** un dispositif de sortie configuré pour confirmer la détermination de sa position (30a-30h) dans la carte interne (60).

6. Robot automoteur selon l'une des revendications précédentes, **caractérisé en ce qu'**il est conçu et configuré pour détecter des meubles et/ou des pièces d'habitation au moyen d'un réseau neuronal.

7. Robot automoteur selon l'une des revendications précédentes, **caractérisé par** un module de communication qui est conçu et configuré pour interroger un autre nom d'emplacement (20a-20h), après une association du nom d'emplacement (20a-20h) à la position (30a-30h) déterminée dans la carte interne (60).

8. Robot automoteur selon l'une des revendications précédentes, **caractérisé en ce que** le dispositif de programmation est conçu et configuré pour commencer automatiquement, après la réception d'un autre signal de commande contenant le nom d'emplacement (20a-20h) et un temps associé au nom d'emplacement (20a-20h), une activité d'aspiration à la position (30a-30h) associée au nom d'emplacement (20a-20h) au temps associé au nom d'emplacement (20a-20h).
